# EUROPEAN PATENT APPLICATION

(11) **EP 4 723 744 A1**
(43) Date of publication of application: **08.04.2026**
(21) Application number: 24825192.8
(22) Date of filing: 14.06.2024
(51) Int. Cl.: H04W 48/08

(54) **INFORMATION CONFIGURATION METHOD AND APPARATUS, AND COMMUNICATION DEVICE AND READABLE STORAGE MEDIUM**

(30) Priority: 20.06.2023 CN 202310735588
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: TAN, Jiayao, Beijing 100032 (CN); TANG, Xiaoxuan, Beijing 100032 (CN)
(74) Representative: J A Kemp LLP
(86) International application number: PCT/CN2024/099190
(87) International publication number: WO 2024/260296

(57) **Abstract**

The present disclosure belongs to the technical field of communications. Provided are an information configuration method and apparatus, and a communication device and a readable storage medium. The information configuration method in the embodiments of the present disclosure comprises: a terminal executing a first operation, wherein the first operation comprises at least one of the following: receiving first information sent by a master node (MN), and receiving second information sent by a secondary node (SN), which first information comprises a first configuration for a continuous CPAC, and which second information comprises a second configuration for the continuous CPAC.

## Description

### CROSS-REFERENCE TO RELATED APPLICATION

This application claims priority to Chinese Patent Application No. 202310735588.4, filed in China on June 20, 2023, the contents of which are hereby incorporated by reference in its entirety.

### TECHNICAL FIELD

The present disclosure relates to the technical field of communications, and particularly to a method and an apparatus for information configuration, a communication device, and a readable storage medium.

### BACKGROUND

In the related art, subsequent conditional primary cell of a secondary cell group (PSCell) addition or change (CPAC) has been introduced. The subsequent CPAC may be a secondary node (SN)-initiated intra-SN secondary cell group (SCG) selective activation, a master node (MN)-initiated inter-SN SCG selective activation, or a SN-initiated inter-SN SCG selective activation. In this case, how to realize the related configuration of the subsequent CPAC is an urgent problem to be solved at present.

### SUMMARY

An object of the present disclosure is to provide a method and an apparatus for information configuration, a communication device, and a readable storage medium, so as to solve the problem of how to implement related configuration of the subsequent CPAC.

In order to solve the above technical problem, the present disclosure is implemented as follows.

According to a first aspect, there is provided a method for information configuration, applied to a user equipment (UE), including: the UE performs a first operation, where the first operation includes at least one of: receiving first information transmitted by a master node (MN); or receiving second information transmitted by a secondary node (SN).

The first information includes a first configuration for subsequent CPAC. The second information includes a second configuration for subsequent CPAC.

According to a second aspect, there is provided a method for information configuration, applied to a master node (MN), including: the MN performs a second operation, where the second operation includes at least one of: transmitting first information to a user equipment (UE); or receiving second information transmitted by a secondary node (SN), and transmitting the second information to the UE.

The first information includes a first configuration for subsequent CPAC. The second information includes a second configuration for subsequent CPAC.

According to a third aspect, there is provided a method for information configuration, applied to a secondary node (SN), including: the SN performs a third operation, where the third operation includes at least one of: transmitting second information to a user equipment (UE); or transmitting the second information to a master node (MN).

The second information includes a second configuration for subsequent CPAC.

According to a fourth aspect, there is provided an apparatus for information configuration, applied to a user equipment (UE), including a first execution module.

The first execution module is configured to perform a first operation, where the first operation includes at least one of: receiving first information transmitted by a master node (MN); or receiving second information transmitted by a secondary node (SN).

The first information includes a first configuration for subsequent CPAC. The second information includes a second configuration for subsequent CPAC.

According to a fifth aspect, there is provided an apparatus for information configuration, applied to a master node (MN), including a second execution module.

The second execution module is configured to perform a second operation, where the second operation includes at least one of: transmitting first information to a user equipment (UE); or receiving second information transmitted by a secondary node (SN), and transmitting the second information to the UE.

The first information includes a first configuration for subsequent CPAC. The second information includes a second configuration for subsequent CPAC.

According to a sixth aspect, there is provided an apparatus for information configuration, applied to a secondary node (SN), including a third execution module.

The third execution module is configured to perform a third operation, where the third operation includes at least one of: transmitting second information to a user equipment (UE); or transmitting the second information to a master node (MN).

The second information includes a second configuration for subsequent CPAC.

In a seventh aspect, there is provided a communication device including a processor, a memory, and a program or instructions stored on the memory and executable by the processor, where the program or instructions, when executed by the processor, implement the method according to the first aspect, or the method according to the second aspect, or the method according to the third aspect.

In an eighth aspect, there is provided a readable storage medium having stored thereon a program or instructions which, when executed by a processor, implements the method according to the first aspect, or the method according to the second aspect, or the method according to the third aspect.

In embodiments of the present disclosure, the UE receives first information transmitted by an MN, and/or receives second information transmitted by an SN. The first information includes a first configuration for subsequent CPAC, and the second information includes a second configuration for subsequent CPAC. Accordingly, the relevant configuration of the subsequent CPAC can be achieved.

### BRIEF DESCRIPTION OF THE DRAWINGS

FIG. 1 is a flowchart of a method for information configuration according to an embodiment of the present disclosure.
FIG. 2 is a flowchart of another method for information configuration according to an embodiment of the present disclosure.
FIG. 3 is a flowchart of a yet another method for information configuration according to an embodiment of the present disclosure.
FIG. 4 is one of the schematic diagrams of a subsequent CPAC procedure according to an embodiment of the present disclosure.
FIG. 5 is a second schematic diagram of a subsequent CPAC procedure according to an embodiment of the present disclosure.
FIG. 6 is a third schematic diagram of a subsequent CPAC procedure according to an embodiment of the present disclosure.
FIG. 7 is a fourth schematic diagram of a subsequent CPAC procedure according to an embodiment of the present disclosure.
FIG. 8 is a schematic structural diagram of an apparatus for information configuration according to an embodiment of the present disclosure.
FIG. 9 is a schematic structural diagram of another apparatus for information configuration according to an embodiment of the present disclosure.
FIG. 10 is a schematic structural diagram of a yet another apparatus for information configuration according to an embodiment of the present disclosure.
FIG. 11 is a schematic structural diagram of a communication device according to an embodiment of the present disclosure.

### DETAILED DESCRIPTION

The technical solutions in the embodiments of the present disclosure will be clearly and completely described below with reference to the accompanying drawings in the embodiments of the present disclosure, and it is obvious that the described embodiments are part of the embodiments of the present disclosure, but are not all the embodiments. All other embodiments obtained by those of ordinary skill in the art based on the embodiments in the disclosure without creative work shall fall within the scope of protection of the disclosure.

The terms "first", "second" and the like in the description and claims of the present disclosure are used to distinguish similar objects, and are not used to describe a particular order or sequence. It should be understood that such terms used may be interchangeable where appropriate so that embodiments of the present disclosure can be implemented in an order other than those illustrated or described herein, and that objects distinguished by "first", "second", etc., are generally of the same class, and the number of objects is not limited, for example, the first object may be one or a plurality of objects. In addition, "and/or" in the description and claims indicates at least one of the associated objects, and the character "/" generally indicates that the associated objects before and after the character "/" are in an "or" relationship.

It is worth pointing out that in addition to Long Term Evolution (LTE)/LTE-Advanced (LTE-A) systems, the techniques described in the embodiments of the present disclosure can also be used in other wireless communication systems, such as a Code Division Multiple Access (CDMA) system, a Time Division Multiple Access (TDMA) system, a Frequency Division Multiple Access (FDMA) system, an Orthogonal Frequency Division Multiple Access (OFDMA) system, a Single-carrier Frequency Division Multiple Access (SC-FDMA) system and other systems. The terms "system" and "network" in embodiments of the present disclosure are often used interchangeably, and the described technologies are applicable to both the above-mentioned systems and radio technologies, as well as other systems and radio technologies, such as a New Radio (NR) system, a 6th Generation (6G) communication system, and the like.

In order to facilitate understanding of the embodiments of the present disclosure, the following contents will be described first.

In various wireless dual connectivity scenarios (such as NR Dual connectivity (DC)), there are two different types of nodes, namely a master node (MN) and a secondary node (SN). The MN mainly provides a control plane connection to the core network, the SN does not have a control plane connection to the core network, and the SN is responsible for providing additional radio resources to terminals such as user equipment (UE).

For the dual-connectivity scenario, two types of cell groups are defined in the related art, namely a master cell group (MCG) and a secondary cell group (SCG). The MCG is a group of serving cells associated with the master node, including a primary cell (PCell) and optionally one or more secondary cells (SCell). The SCG is a group of serving cells associated with a secondary node, including a primary cell of a SCG (PSCell) and optionally one or more SCells.

In embodiments of the present disclosure, the subsequent CPAC may also be referred to as cell group selective activation, or subsequent conditional primary cell of a secondary cell group (PSCell) change (CPC), or subsequent conditional primary cell of a secondary cell group (PSCell) addition or change (CPA)/CPC, etc.

Optionally, the subsequent CPAC in the following embodiments of the present disclosure may include, but is not limited to, SCG selective activation and the like.

The method and apparatus for information configuration, a communication device, and a readable storage medium provided by embodiments of the present disclosure will be described in detail below with reference to the accompanying drawings and through specific embodiments and application scenarios thereof.

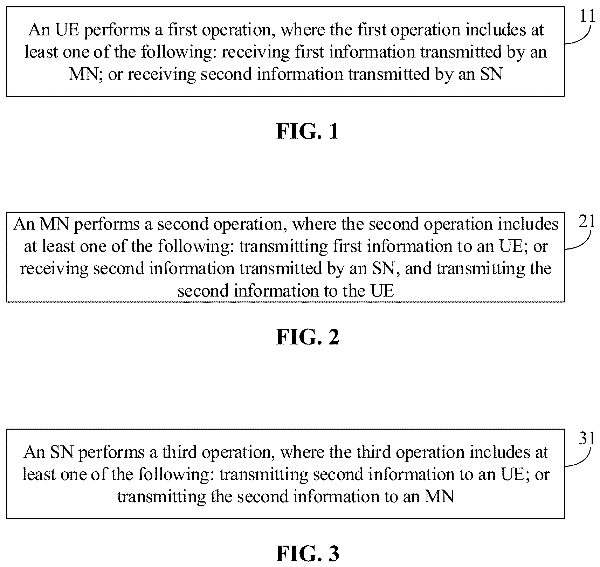

Referring to FIG. 1, FIG. 1 is a flowchart of a method for information configuration according to an embodiment of the present disclosure, and the method is applied to a user equipment (UE). As illustrated in FIG. 1, the method includes the following operations.

At 11: the UE performs a first operation, where the first operation includes at least one of the following: receiving first information transmitted by an MN; or receiving second information transmitted by an SN.

Here, the first information includes a first configuration for subsequent CPAC. The first configuration may include both a configuration of the MN and a configuration of the SN. The first configuration is, for example, a configuration for inter-SN subsequent CPAC. The second information includes a second configuration for subsequent CPAC, such as a configuration for intra-SN subsequent CPAC.

In some embodiments, the UE may receive only the first information transmitted by the MN.

In another embodiment, the UE may receive only the second information transmitted by the SN.

In other embodiments, the UE may receive the first information transmitted by the MN and receive the second information transmitted by the SN.

In this way, with the information transmitted by the MN/SN, the relevant configuration for subsequent CPAC can be obtained.

In some embodiments, if messages between the SN and the UE need to be forwarded by the MN, the operation of receiving second information transmitted by the SN may include that the UE receives the second information transmitted by the SN through the MN, thereby obtaining information configured by the SN for subsequent CPAC.

In some embodiments, the first information may further include at least one of the following:
a configuration of a candidate primary cell of a secondary cell group (PSCell); for example, the configuration may include a PSCell identity (ID), execution conditions for conditional PSCell change (CPC) and/or conditional PSCell addition (CPA), and the like;
first indication information for indicating that the first configuration is for subsequent CPAC, so that the UE performs the subsequent CPAC according to the first configuration;
a validity period or validity area of the first configuration; in this way, once the validity period of the first configuration expires, the stored first configuration can be released, thereby avoiding occupying network resources;
the maximum number of subsequent CPACs supported; here, the maximum number refers to the maximum number allowed by the network; the UE releases the stored configuration after performing the maximum number of subsequent CPACs; or
second indication information for indicating whether the selected PSCell can continue to be evaluated or whether the selected PSCell is to be released.

In some embodiments, the second information may further include at least one of the following:
a configuration of the candidate PSCell; for example, the configuration may include a PSCell identity (ID), execution conditions for CPC and/or CPA, etc.;
third indication information for indicating that the second configuration is for subsequent CPAC, so that the UE performs the subsequent CPAC according to the second configuration;
a validity period or validity area of the second configuration; in this way, after the validity period of the second configuration expires, the stored second configuration can be released, thereby avoiding occupying network resources;
the maximum number of subsequent CPACs supported; here, the maximum number refers to the maximum number allowed by the network; the UE releases the stored configuration after performing the maximum number of subsequent CPACs; or
fourth indication information for indicating whether the selected PSCell can continue to be evaluated or whether the selected PSCell is to be released.

In some embodiments, when the UE receives the first configuration and the second configuration, the UE may simultaneously evaluate the execution conditions of the candidate PSCells in the first configuration and the second configuration, so as to access, according to the evaluation results, the candidate PSCell that satisfies the execution conditions.

In some embodiments, when the candidate PSCell satisfying the execution condition is an inter-SN PSCell, that is, the candidate PSCell satisfying the execution condition is not a cell of the same SN as the current serving PSCell, the UE may release the stored second configuration, that is, release the stored second configuration for intra-SN subsequent CPAC.

In some embodiments, if there is no PSCell of the serving SN or the source SN among the candidate PSCells in the first configuration, the UE may release the stroed second configuration, that is, release the stored second configuration for the intra-SN subsequent CPAC. The serving SN or the source SN may be referred to as the current SN.

In some embodiments, if there is a PSCell of the serving SN or the source SN among the candidate PSCells in the first configuration, the UE may remain the second configuration, that is, continue to store the second configuration for the intra-SN subsequent CPAC. However, at this time, the UE no longer evaluates the candidate PSCells in the second configuration, and does not start the evaluation of intra-SN candidate PSCells until the UE returns to the serving SN or the source SN again. The serving SN or the source SN may be referred to as the current SN.

In some embodiments, when the candidate PSCell satisfying the execution condition is an intra-SN PSCell, the UE may remain the first configuration and the second configuration, that is, remain the first configuration for the inter-SN subsequent CPAC and the second configuration for the intra-SN subsequent CPAC, and continue to evaluate the candidate PSCells in a subsequent process.

In some embodiments, when multiple candidate PSCells satisfy corresponding execution conditions at the same time, the UE may preferentially select and/or access an intra-SN PSCell among the multiple candidate PSCells, that is, a PSCell belonging to a current SN, a serving SN, or a source SN.

In some embodiments, in order for the MN and/or SN to know the UE situation, the UE may send assistance information to the MN and/or SN, the assistance information being used to indicate at least one of the following: the UE enters a power saving mode, suspends a subsequent CPAC procedure (e.g., suspends an intra-SN subsequent CPAC procedure and/or an inter-SN subsequent CPAC), continues to retain a first configuration for subsequent CPAC, or continues to retain a second configuration for subsequent CPAC. For example, the UE may transmit the assistance information to the MN and/or the SN through UE assistance information.

In some embodiments, when the UE returns from the power-saving mode, that is, when the UE returns from the power-saving mode to the normal mode, the UE may send fifth indication information to the MN and/or the SN, and the fifth indication information is used to instruct the UE to continue to execute the subsequent CPAC procedure, so that the MN and/or the SN know that the UE will continue to execute the subsequent CPAC procedure, thus ensuring consistency between the network and the UE.

In some embodiments, the UE may receive sixth indication information transmitted by the MN and/or the SN, where the sixth indication information indicates at least one of the following:
stopping/ending the subsequent CPAC procedure; for example, stopping/ending the intra-SN and/or inter-SN subsequent CPAC procedure;
releasing a stored first configuration for subsequent CPAC; or
releasing a stored second configuration for subsequent CPAC.

In some embodiments, the UE may transmit seventh indication information to the MN and/or the SN, where the seventh indication information indicates that the subsequent CPAC procedure has ended, so that the MN and/or the SN know that the subsequent CPAC procedure of the UE has ended.

In some embodiments, when the SN-initiated intra-SN subsequent CPAC procedure, the MN-initiated inter-SN subsequent CPAC procedure, and the SN-initiated inter-SN subsequent CPAC procedure use a same reference configuration, the UE may receive eighth indication information transmitted by the MN and/or the SN, where the eighth indication information instructs the UE to store only one set of reference configurations to execute the subsequent CPAC procedures according to the reference configurations.

Referring to FIG. 2, FIG. 2 is a flowchart of a method for information configuration according to an embodiment of the present disclosure, and the method is applied to a master node (MN). As illustrated in FIG. 2, the method includes the following operations,
At 21: the master node (MN) performs a second operation, where the second operation includes at least one of: transmitting first information to a user equipment; or receiving second information transmitted by an SN, and transmitting the second information to the UE.

Here, the first information includes a first configuration for a subsequent CPAC. The first configuration may include both a configuration of an MN and a configuration of an SN. The first configuration is, for example, a configuration for an inter-SN subsequent CPAC. The second information includes a second configuration for the subsequent CPAC, such as a configuration for an intra-SN subsequent CPAC.

In some embodiments, the MN may directly transmit the first information to the UE.

In another embodiment, after receiving the second information transmitted by the SN, the MN may forward the second information to the UE.

In this way, with the information transmitted by the MN/SN, the relevant configuration for the subsequent CPAC can be obtained.

In some embodiments, the first information may further include at least one of the following:
a configuration of a candidate primary cell of a secondary cell group (PSCell); for example, the configuration may include a PSCell ID, execution conditions for CPC and/or CPA, etc.;
first indication information for indicating that the first configuration is for subsequent CPAC, so that the UE performs the subsequent CPAC according to the first configuration;
a validity period or validity area of the first configuration; in this way, after the validity period of the first configuration expires, the stored first configuration can be released, thereby avoiding occupying network resources;
the maximum number of subsequent CPACs supported; here, the maximum number refers to the maximum number allowed by the network; the UE releases the stored configuration after performing the maximum number of subsequent CPACs; or
second indication information for indicating whether the selected PSCell can continue to be evaluated or whether the selected PSCell is to be released.

In some embodiments, the second information may further include at least one of the following:
configuration of candidate PSCells; for example, the configuration may include a PSCell ID, execution conditions for CPC and/or CPA, etc.;
third indication information for indicating that the second configuration is for subsequent CPAC so that the UE performs the subsequent CPAC according to the second configuration;
a validity period or validity area of the second configuration; in this way, after the validity period of the second configuration expires, the stored second configuration can be released, thereby avoiding occupying network resources;
the maximum number of subsequent CPACs supported; here, the maximum number refers to the maximum number allowed by the network; the UE releases the stored configuration after performing the maximum number of subsequent CPACs; or
fourth indication information for indicating whether the selected PSCell can continue to be evaluated or whether the selected PSCell is to be released.

For subsequent CPAC, three cases can be included, as follows:
case 1: SN-initiated intra-SN subsequent CPAC; for example, SN-initiated intra-SN SCG selective activation;
case 2: MN-initiated inter-SN subsequent CPAC; for example, MN-initiated inter-SN SCG selective activation; and
case 3: SN-initiated inter-SN subsequent CPAC; for example, SN-initiated inter-SN SCG selective activation.

Alternatively, the above three cases cannot coexist, or may coexist.

The above three cases cannot coexist, that is, case 1, case 2 and case 3 cannot coexist, and only one of the three cases can be configured for the UE at a time:
1) Case 1 is configured. In this case, the MN does not know that the SN has initiated the intra-SN subsequent CPAC procedure, and the SN needs to notify the MN that the SN has initiated the intra-SN subsequent CPAC procedure, for example, by adding an indication or notifying the MN through a new message, so that the MN will no longer configure the UE with the MN-initiated inter-SN subsequent CPAC procedure.
2) Case 2 is configured. In this case, the MN only sends addition messages to other target SNs, and the source SN does not know that the MN has initiated the inter-SN subsequent CPAC. The MN needs to notify the SN that the MN has initiated the intra-SN subsequent CPAC procedure, for example by adding an indication or notifying the SN through a new message, so that the SN will no longer configure the UE with the SN-initiated intra-SN subsequent CPAC procedure or SN-initiated inter-SN subsequent CPAC procedure. Alternatively, when the SN triggers the inter-SN subsequent CPAC procedure, the MN may reject the triggering from the SN and add a reject cause to indicate that the MN-initiated inter-SN subsequent CPAC has been configured for the UE. Alternatively, the MN may indicate the SN whether the SN is allowed to trigger the intra-SN or inter-SN subsequent CPAC procedure; for example, when the MN triggers inter-SN subsequent CPAC, the SN may be instructed not to allow it to trigger the intra-SN or inter-SN subsequent CPAC procedure.
3) Case 3 is configured. In this case, the SN needs to send messages to other target SNs through the MN, so the MN can detect that the SN has triggered the inter-SN subsequent CPAC procedure, and will not configure the MN-initiated inter-SN subsequent CPAC procedure for the UE.

The above three cases may coexist, and may be configured simultaneously with case 1 and case 2, or may be configured simultaneously with case 1 and case 3, or may be configured simultaneously with case 2 and case 3, or may be configured simultaneously with case 1, case 2 and case 3 depending on the network decision. If the UE receives configurations for the inter-SN and the intra-SN, the UE may simultaneously evaluate execution conditions of candidate PSCells in the configurations for the intra-SN and the inter-SN, and when an inter-SN PSCell satisfies the execution conditions, the UE needs to release the stored configuration for the intra-SN subsequent CPAC. If multiple candidate PSCells satisfy the execution condition simultaneously, the UE preferentially selects/accesses the intra-SN candidate PSCell. When the above three cases can coexist, the MN can send a reference configuration to the source SN in advance, where the reference configuration is used to perform delta configuration of the candidate PSCell, that is, case 1, case 2, and case 3 can use the same set of reference configurations, and at this time, an indication can be added to instruct the UE to store only one set of reference configurations. Alternatively, each case has a respective different reference configuration. The UE stores different reference configurations, and the node that initiates the subsequent CPAC procedure determines which reference configuration to be used.

Optionally, if the SN-initiated subsequent CPAC and the MN-initiated subsequent CPAC cannot coexist, the MN may perform at least one of the following:
1) the MN receives ninth indication information transmitted by the SN, where the ninth indication information indicates that the SN has initiated a subsequent CPAC procedure; for example, the ninth indication information indicates that the SN has initiated an intra-SN subsequent CPAC procedure. In this way, the MN will no longer configure the UE with the MN-initiated inter-SN subsequent CPAC procedure to avoid collision;
2) the MN receives tenth indication information transmitted by the SN, where the tenth indication information indicates that the SN-initiated subsequent CPAC procedure has ended; for example, the tenth indication information indicates that the SN-initiated intra-SN subsequent CPAC procedure has ended. In this way, the MN can know that the SN-initiated subsequent CPAC procedure has ended;
3) the MN transmits eleventh indication information to the SN, where the eleventh indication information indicates that the MN has initiated a subsequent CPAC procedure; for example, the eleventh indication information indicates that the MN has initiated an inter-SN subsequent CPAC procedure. In this way, the SN will no longer configure the UE with the SN-initiated intra-SN or inter-SN subsequent CPAC procedure to avoid collision;
4) the MN transmits twelfth indication information to the SN, where the twelfth indication information indicates that the MN-initiated subsequent CPAC procedure has ended; for example, the twelfth indication information indicates that the MN-initiated inter-SN subsequent CPAC procedure has ended;
5) the MN sends thirteenth indication information to the SN, where the thirteenth indication information indicates whether the SN is allowed to initiate a subsequent CPAC procedure; for example, the thirteenth indication information indicates whether the SN is allowed to initiate an intra-SN and/or inter-SN subsequent CPAC procedure;
6) when the SN initiates the subsequent CPAC procedure, such as an inter-SN subsequent CPAC procedure, the MN transmits third information to the SN, where the third information is used to reject the subsequent CPAC procedure initiated by the SN; for example, the third information may include a rejection reason, such as the MN has initiated a subsequent CPAC procedure; or
7) when the SN initiates a subsequent CPAC procedure, such as an inter-SN subsequent CPAC procedure, the MN sends fourteenth indication information to the SN, where the fourteenth indication information indicates that the MN-initiated subsequent CPAC has been configured for the UE; for example, the fourteenth indication information indicates that the MN-initiated inter-SN subsequent CPAC has been configured for the UE.

In some embodiments, when the MN receives the second information transmitted by the SN, that is, the message between the SN and the UE needs to be forwarded by the MN, the method for information configuration may further include at least one of the following:
(1) the MN transmits fourth information to the SN, where the fourth information includes the maximum number of candidate PSCells configurable for the SN to initiate a subsequent CPAC;
(2) the MN receives fifteenth indication information transmitted by the SN, where the fifteenth indication information indicates the end of the subsequent CPAC procedure;
(3) the MN receives fifth information transmitted by the SN, and transmits the fifth information to the UE, where the fifth information includes sixth indication information. The sixth indication information indicates at least one of the following: ending the subsequent CPAC procedure, or releasing the stored second configuration for the subsequent CPAC; or
(4) the MN receives seventh indication information transmitted by the UE, where the seventh indication information indicates that the subsequent CPAC procedure has ended, so that the MN knows that the subsequent CPAC procedure of the UE has ended.

In some embodiments, when the MN transmits the first information to the UE, that is, the MN configures the subsequent CPAC, the method for information configuration may further include at least one of the following:
(a) the MN sends an addition request message to the target SN, where the addition request message includes sixteenth indication information for indicating that the addition request message is for subsequent CPAC;
(b) the MN transmits sixth indication information to the UE, where the sixth indication information indicates at least one of the following: ending the subsequent CPAC procedure, or releasing the stored first configuration for the subsequent CPAC;
(c) the MN receives seventh indication information transmitted by the UE, where the seventh indication information indicates the end of the subsequent CPAC procedure so that the MN knows that the subsequent CPAC procedure of the UE has ended;
(d) the MN transmits seventeenth indication information to the target SN, where the seventeenth indication information indicates that the subsequent CPAC procedure has ended; or
(e) the MN receives an SN change request message transmitted by the source SN, where the SN change request message includes eighteenth indication information, the eighteenth indication information indicating that the SN change request is for subsequent CPAC, or the eighteenth indication information indicating that the subsequent CPAC has ended.

In some embodiments, the MN may receive assistance information transmitted by the UE, where the assistance information indicates at least one of the following: the UE enters a power saving mode, suspends the subsequent CPAC procedure (e.g., suspends an intra-SN and/or inter-SN subsequent CPAC procedure), continues to retain a first configuration for the subsequent CPAC, or continues to retain a second configuration for the subsequent CPAC. In this way, the MN can be timely informed of the UE situation.

In some embodiments, when the UE returns from the power-saving mode, that is, when the UE returns from the power-saving mode to the normal mode, the MN may receive fifth indication information transmitted by the UE, where the fifth indication information indicates that the UE will continue to execute the subsequent CPAC procedure, so that the MN can know in time that the UE will continue to execute the subsequent CPAC procedure.

Referring to FIG. 3, FIG. 3 is a flowchart of a method for information configuration according to an embodiment of the present disclosure, and the method is applied to a secondary node (SN). As illustrated in FIG. 3, the method includes the following operations.

At 31: the secondary node (SN) performs a third operation, where the third operation includes at least one of the following: transmitting second information to the UE; or transmitting the second information to the MN.

Here, the second information includes a second configuration for subsequent CPAC, such as a configuration for an intra-SN or inter-SN subsequent CPAC.

In some embodiments, the SN may directly transmit the second information to the UE.

In another embodiment, the SN may first transmit the second information to the MN, and the MN may forward the received second information to the UE.

In this way, the relevant configuration for the subsequent CPAC can be obtained based on the information transmitted by the SN.

In some embodiments, the second information may further include at least one of the following:
a configuration of a candidate PSCell; for example, the configuration may include a PSCell ID, execution conditions for CPC and/or CPA, etc.;
third indication information for indicating that the second configuration is for a subsequent CPAC, so that the UE performs the subsequent CPAC according to the second configuration;
a validity period or validity area of the second configuration; in this way, after the validity period of the second configuration expires, the stored second configuration can be released, thereby avoiding occupying network resources;
the maximum number of subsequent CPACs supported; here, the maximum number refers to the maximum number allowed by the network; the UE releases the stored configuration after performing the maximum number of subsequent CPACs; or
fourth indication information for indicating whether a selected PSCell can continue to be evaluated or whether the selected PSCell is to be released.

Optionally, the method for information configuration may further include at least one of the following:
the SN transmits ninth indication information to the MN, where the ninth indication information indicates that the SN has initiated a subsequent CPAC procedure; or
the SN transmits tenth indication information to the MN, where the tenth indication information indicates that the SN-initiated subsequent CPAC procedure has ended.

Optionally, the method for information configuration may further include at least one of the following:
the SN receives eleventh indication information transmitted by the MN, where the eleventh indication information indicates that the MN has initiated a subsequent CPAC procedure;
the SN receives twelfth indication information transmitted by the MN, where the twelfth indication information indicates that the MN-initiated subsequent CPAC procedure has ended;
the SN receives thirteenth indication information transmitted by the MN, where the thirteenth indication information indicates whether the SN is allowed to initiate a subsequent CPAC procedure;
when the SN initiates the subsequent CPAC procedure, the SN receives third information transmitted by the MN, the third information being used to reject the SN from initiating the subsequent CPAC procedure; or
when the SN initiates the subsequent CPAC procedure, the SN receives fourteenth indication information transmitted by the MN, where the fourteenth indication information indicates that an MN-initiated subsequent CPAC has been configured for the UE.

In some embodiments, after receiving the eleventh indication information transmitted by the MN, the SN does not initiate the subsequent CPAC procedure.

Optionally, the method for information configuration may further include at least one of the following:
the SN receives fourth information transmitted by the MN, where the fourth information includes the maximum number of candidate PSCells configurable for the SN to initiate a subsequent CPAC;
the SN transmits nineteenth indication information to the MN, where the nineteenth indication information indicates that the UE is executing a subsequent CPAC;
the SN transmits fifteenth indication information to the MN, where the fifteenth indication information indicates an end of the subsequent CPAC procedure;
the SN transmits sixth indication information to the UE, where the sixth indication information indicates at least one of the following: ending a subsequent CPAC procedure, or releasing the stored second configuration;
the SN transmits fifth information to an MN, and the MN transmits fifth information to the UE; where the fifth information includes sixth indication information for indicating at least one of: ending a subsequent CPAC procedure, or releasing the stored second configuration; or
the SN receives seventh indication information transmitted by the UE, where the seventh indication information indicates the subsequent CPAC procedure has ended.

Optionally, if the SN is a source SN and a subsequent CPAC procedure is initiated, the method for information configuration may further include that:
the source SN transmits an SN change request to the MN, where the SN change request includes eighteenth indication information, the eighteenth indication information indicating that the SN change request is for subsequent CPAC, or the eighteenth indication information indicating that the subsequent CPAC has ended.

Optionally, if the SN is a target SN and a subsequent CPAC procedure is initiated, the information configuration method may further include at least one of the following:
the target SN receives an addition request message transmitted by an MN, where the addition request message includes sixteenth indication information for indicating that the addition request message is for subsequent CPAC; or
the target SN receives seventeenth indication information transmitted by the MN, where the seventeenth indication information indicates that the subsequent CPAC procedure has ended.

In some embodiments, the SN may receive assistance information transmitted by the UE, where the assistance information indicates at least one of the following: the UE enters a power saving mode, suspends a subsequent CPAC procedure (e.g., suspends an intra-SN or inter-SN subsequent CPAC procedure), continues to retain a first configuration for the subsequent CPAC, or continues to retain a second configuration for the subsequent CPAC. In this way, the SN can be timely informed of the UE situation.

In some embodiments, when the UE returns from the power-saving mode, that is, when the UE returns from the power-saving mode to the normal mode, the SN may receive fifth indication information transmitted by the UE, the fifth indication information indicating that the UE will continue to execute the subsequent CPAC procedure, so that the SN can know in time that the UE will continue to execute the subsequent CPAC procedure.

Hereinafter, a subsequent CPAC procedure in the present disclosure will be described with reference to specific examples.

### Example 1

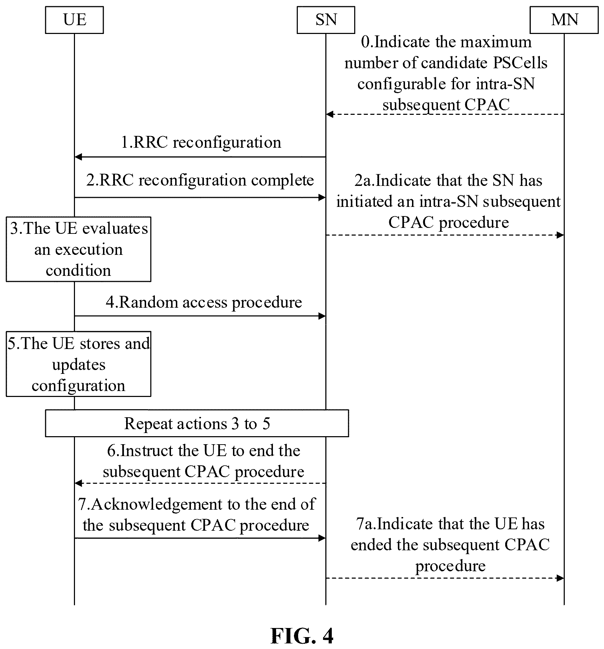

In this example 1, for an SN-initiated intra-SN subsequent CPAC (such as SN-initiated intra-SN selective activation of cell group) without MN involvement, the SN may issue a configuration to the UE using a signalling radio bearer 3 (SRB 3). As illustrated in FIG. 4, a specific subsequent CPAC procedure includes the following actions.

At 0 (optional): the MN sends a message to the SN, where the message includes the maximum number of candidate PSCells configurable for the SN to perform intra-SN and/or inter-SN subsequent CPAC, and/or thirteenth indication information for indicating whether the SN is allowed to initiate the intra-SN and/or inter-SN subsequent CPAC procedure. Further, the maximum number of the candidate PSCells may be agreed by a protocol.

At 1: the SN transmits a radio resource control (RRC) reconfiguration message to the UE, where the RRC reconfiguration message includes a second configuration for subsequent CPAC (for example, including a candidate PSCell ID, a corresponding configuration, an execution condition, etc.) and third indication information for indicating that these configurations/the procedure is for subsequent CPAC. The configuration here may be a delta configuration. The SN includes a separate reference configuration and an indication in the RRC reconfiguration message to indicate that this configuration is a delta configuration. In addition, the SN may provide a validity period or validity area of the second configuration, the maximum number of subsequent CPACs supported, fourth indication information for indicating whether the selected PSCell can continue to be evaluated, and the like.

At 2: the UE stores the second configuration transmitted by the SN, and transmits an RRC reconfiguration complete message to the SN.

At 2a (optional, and is not limited to the sequence of step 1 and step 2): the SN transmits ninth indication information to the MN, where the ninth indication information indicates that the SN has initiated an intra-SN subsequent CPAC procedure. In addition, the SN may also transmit a reference configuration, a candidate PSCell list, a corresponding configuration, and the like to the MN.

At 3: the UE evaluates the execution condition of the candidate PSCell.

At 4: if an execution condition of a candidate PSCell is satisfied, the UE disconnects from the source PSCell, and randomly accesses the candidate PSCell using the configuration corresponding to the candidate PSCell.

At 5: the UE remains the second configuration transmitted by the SN in step 1, and performs corresponding deletion or release according to the instruction of the SN. For example, if the SN indicates that the selected PSCell cannot be accessed again, the UE deletes its corresponding configuration.

Action 3 to action 5 are repeated until the SN instructs to stop the subsequent CPAC procedure or release the corresponding configuration, or until the condition of ending the subsequent CPAC procedure configured in action 1 is satisfied, and the subsequent CPAC procedure is ended/stopped.

In some embodiments, the UE may transmit a message (such as UE assistance information) to the SN, which carries some assistance information, such as information indicating that the UE enters a power saving mode, suspends a subsequent CPAC procedure, continues to retain a configuration, and so on. After receiving this message, the SN may first release/deactivate the configuration of the candidate PSCell. When the UE returns from the power saving mode to the normal mode, the UE may indicate the SN that the UE will continue to perform the subsequent CPAC, and the SN re-reserves/activates the previous candidate PSCell configuration.

At 6 (optional): the SN instructs the UE to end the subsequent CPAC procedure/subsequent PSCell change procedure, or instructs the UE to release the stored configuration; the indication may be carried, for example, through an RRC reconfiguration message or a MAC CE.

At 7: if the SN has indicated conditions for ending the subsequent CPAC procedure in step 1, such as a validity period of the configuration, the maximum number of subsequent CPACs, and the like, the UE may transmit an RRC reconfiguration complete message to the SN after the execution conditions are satisfied to confirm the end of the subsequent CPAC procedure. If the UE receives the indication from the SN in step 6, the UE will respond with an acknowledgement to end of the subsequent CPAC procedure, for example, the ACK may be carried in the RRC reconfiguration complete message.

At 7a (optional): the SN indicates the end of the subsequent CPAC procedure for MN.

### Example 2

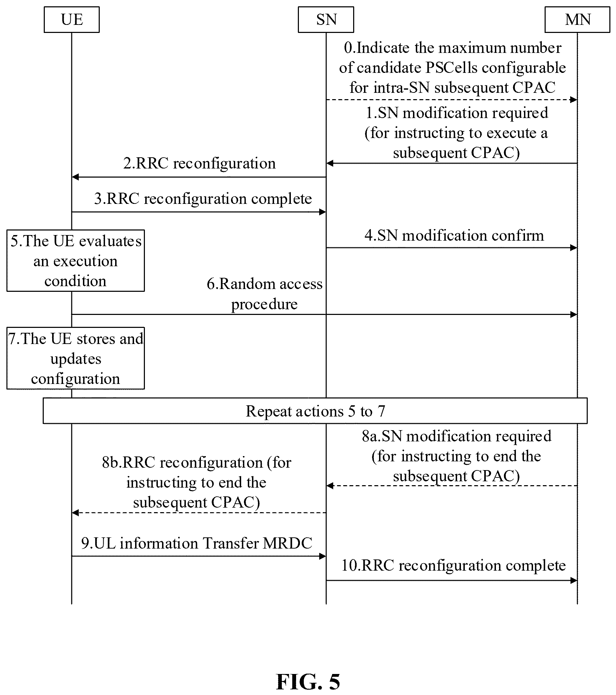

In this example 2, for an SN-initiated intra-SN subsequent CPAC (such as SN-initiated intra-SN selective activation of cell group) without MN involvement, the main difference from the above example 1 is that there is no SRB 3 between an SN and a UE, and messages between the SN and the UE are forwarded through an MN. As illustrated in FIG. 5, a specific subsequent CPAC procedure includes the following actions.

At 0 (optional): the MN transmits a message to the SN, where the message includes the maximum number of candidate PSCells configurable for the SN to perform intra-SN and/or inter-SN subsequent CPAC. In addition, the maximum number of candidate PSCells may be agreed by a protocol.

At 1: the SN transmits an SN modification required message to the MN, which includes the RRC reconfiguration message of the SN, and an indication indicating that these configurations/this procedure is for subsequent CPAC.

At 2: the MN transmits, to the UE, an RRC reconfiguration message of the SN including a second configuration (e.g., including a candidate PSCell ID, a corresponding configuration, an execution condition, etc.) for subsequent CPAC, and third indication information for indicating that these configurations/the procedure is for subsequent CPAC. The configuration here may be a delta configuration. The SN includes a separate reference configuration and an indication in the RRC reconfiguration message to indicate that this configuration is a delta configuration. Further, the SN may provide a validity period of the second configuration, the maximum number of subsequent CPACs supported, fourth indication information for indicating whether the selected PSCell can continue to be evaluated, and the like.

At 3: the UE stores the second configuration transmitted by the SN, and transmits an RRC reconfiguration complete message to the MN.

At 4: after receiving the RRC reconfiguration complete message sent by the UE, the MN transmits the SN modification confirm message included therein to the SN.

At 5: the UE evaluates the execution condition of the candidate PSCell.

At 6: if an execution condition of a certain candidate PSCell is satisfied, the UE disconnects from the source PSCell, and randomly accesses the candidate PSCell using the configuration corresponding to the candidate PSCell.

At 7: the UE performs corresponding deletion or release according to the instruction of the SN; for example, if the SN indicates that the selected PSCell cannot be accessed again, the UE deletes its corresponding configuration.

Step 5 to step 7 are repeated until the SN instructs to stop the subsequent CPAC procedure or release of the corresponding configuration, or until the configured condition of ending the subsequent CPAC procedure is satisfied, and the subsequent CPAC procedure is ended/stopped.

In some embodiments, the UE may transmit an uplink (UL) information transfer MRDC message to the MN, which carries UE assistance information. The MN sends the received UE assistance information to the SN, which carries some assistance information, such as information indicating that the UE enters the power saving mode, suspends the subsequent CPAC procedure, continues to retain the configuration, and so on. After receiving this message, the SN may first release/deactivate the configuration of the candidate PSCell. When the UE returns from the power saving mode to the normal mode, the UE may indicate the SN that the UE will continue to perform the subsequent CPAC, and the SN re-reserves/activates the previous candidate PSCell configuration.

At 8a (optional): the SN sends an SN modification required message to the MN, which includes an RRC reconfiguration message of the SN, and an indication instructing the UE to end the subsequent CPAC procedure/subsequent PSCell change procedure.

At 8b (optional): the MN transmits the RRC reconfiguration message of the SN to the UE, which includes an indication to end the subsequent CPAC procedure/subsequent PSCell change procedure, or to release the stored configuration.

At 9: if the RRC reconfiguration message of the SN in step 2 indicates a condition for ending the subsequent CPAC procedure, such as a validity period of the configuration, the maximum number of subsequent CPACs, and the like, after the execution condition is satisfied, the UE transmits an UL information transfer MRDC message to the MN, which carries an RRC reconfiguration complete message and an indication indicating the end of the subsequent CPAC procedure. If the UE receives the indication of the SN in step 8a/8b, the UE acknowledges the end of the subsequent CPAC procedure.

At 10: the MN sends the RRC reconfiguration complete message to the SN.

### Example 3

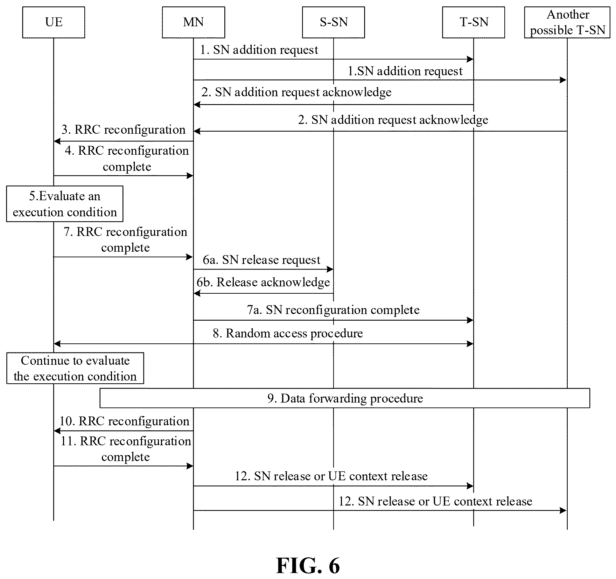

In Example 3, for an MN-initiated inter-SN subsequent CPAC (such as MN-initiated inter-SN selective activation of cell groups), as illustrated in FIG. 6, a specific subsequent CPAC procedure includes the following actions.

At 1-2: an MN sends an SN addition request message to a target SN (T-SN), where the SN addition request message includes an indication indicating that the addition request message is for a subsequent CPAC, a separate reference configuration for delta configuration, a source PSCell/SCG configuration, etc.; and receives an addition request acknowledge message sent by the target SN. It should be noted that in the related art, the source PSCell/SCG configuration is used as a reference configuration for the delta configuration, but the separate reference configuration is introduced here, and the source PSCell/SCG configuration may also be provided to the target SN for reference.

At 3-4: the MN encapsulates a candidate PSCell configuration in an RRC reconfiguration message and transmits it to the UE; thereafter, the UE stores the received configuration and sends an RRC reconfiguration complete message to the MN. Optionally, the RRC reconfiguration message includes a first configuration (for example, including a candidate PSCell ID, a corresponding configuration, an execution condition, etc.) for the subsequent CPAC, third indication information, etc., where the third indication information indicates that these configurations/this procedure is for the subsequent CPAC. The MN may include a separate reference configuration and an indication indicating that this is a delta configuration in the RRC reconfiguration message. Further, the MN may provide a validity period or validity area of the first configuration, the maximum number of subsequent CPACs supported, fourth indication information for indicating whether the selected PSCell can continue to be evaluated, and the like.

At 5 and 7: UE evaluates execution conditions for candidate PSCells. When the execution condition for a candidate PSCell is satisfied, the UE transmits an RRC reconfiguration complete message to the MN, in which information of the target SN is carried.

At 6a and 6b: the MN requests the source SN to release, and the source SN replies with a release acknowledgement.

At 7a: the MN forwards an SN Reconfiguration complete message to the target SN.

At 8: the UE accesses the target PSCell using the preconfigured PSCell configuration.

The UE continues to evaluate the candidate PSCell, repeating actions 5 to 8.

At 9: a data forwarding procedure between the MN, the source SN, and the target SN is performed. The specific process is similar to that of the related art, and the description thereof is omitted here.

At 10 (optional): the MN transmits an RRC reconfiguration message to the UE, which carries indication information for instructing the UE to end the subsequent CPAC procedure.

At 11: if the RRC reconfiguration message from the MN in action 3 indicates a condition for ending the subsequent CPAC procedure, such as a configuration validity period, the maximum number of executions, and the like, after the execution condition is satisfied, the UE may transmit an RRC reconfiguration complete message to the MN, which carries an indication indicating that the subsequent CPAC procedure has ended. If the UE receives the indication from the MN in action 9, the UE acknowledges the end of the subsequent CPAC procedure.

At 12: the MN transmits an SN release or UE context release message to all candidate target SNs, indicating that the subsequent CPAC procedure has ended.

### Example 4

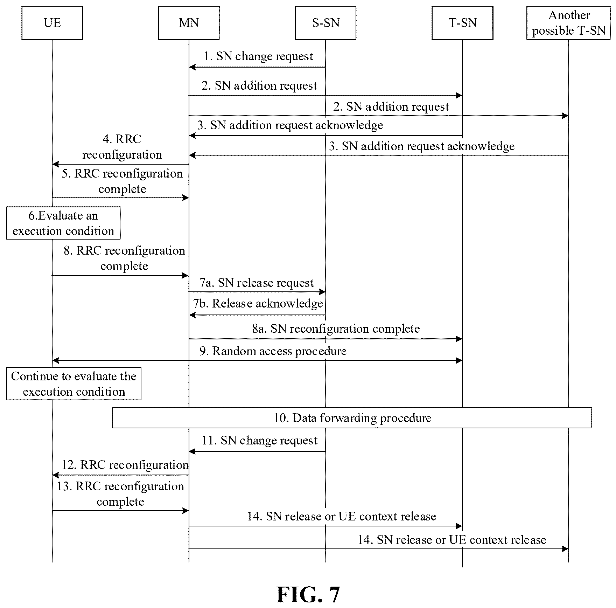

In this example 4, for an SN-initiated inter-SN subsequent CPAC (such as SN-initiated inter-SN selective activation of cell group), as illustrated in FIG. 7, a specific subsequent CPAC procedure includes the following actions.

At 1: a source SN (S-SN) transmits an SN change request message to an MN, which includes an indication indicating that the request message is for subsequent CPAC.

At 2-3: the MN transmits an SN addition request message to a target SN (T-SN), where the SN addition request message includes an indication indicating that the addition request message is for subsequent CPAC, a separate reference configuration for delta configuration, a source PSCell/SCG configuration, etc.; and receives an addition request acknowledge message sent by the target SN. It should be noted that in the related art, the source PSCell/SCG configuration is used as a reference configuration for the delta configuration, but a separate reference configuration is introduced here, and the source PSCell/SCG configuration may also be provided to the target SN for reference.

At 4-5: the MN encapsulates a candidate PSCell configuration in an RRC reconfiguration message and transmits it to the UE; thereafter, the UE stores the received configuration and sends an RRC reconfiguration complete message to the MN. Optionally, the RRC reconfiguration message includes a first configuration (for example, including a candidate PSCell ID, a corresponding configuration, an execution condition, etc.) for the subsequent CPAC, third indication information, etc., where the third indication information indicates that these configurations/the procedure is for the subsequent CPAC.The MN may include a separate reference configuration and an indication indicating that this is a delta configuration in the RRC reconfiguration message. Further, the MN may provide a validity period or validity area of the first configuration, the maximum number of subsequent CPACs supported, fourth indication information for indicating whether the selected PSCell can continue to be evaluated, and the like.

At 6 and 8: UE evaluates execution conditions for candidate PSCells; when the execution condition for a candidate PSCell is satisfied, the UE transmits an RRC reconfiguration complete message to the MN, in which information of the target SN is carried.

At 7a and 7b: the MN requests the source SN to release, and the source SN replies with a release acknowledgement.

At 8a: the MN forwards the SN reconfiguration complete message to the target SN.

At 9: the UE accesses the target PSCell using the preconfigured PSCell configuration.

The UE continues to evaluate the candidate PSCell and repeats action 6 to action 9.

At 10: a data forwarding procedure between the MN, the source SN, and the target SN is performed. The specific process is similar to that of the related art, and the description thereof is omitted here.

At 11 (optional): the source SN sends an SN change required message to the MN, which carries indication information to instruct to end the subsequent CPAC procedure.

At 12 (optional): the MN transmits an RRC reconfiguration message to the UE, which carries indication information for instructing the UE to end the subsequent CPAC procedure.

At 13: if the RRC reconfiguration message from the MN in action 3 indicates a condition for ending the subsequent CPAC procedure, such as a configuration validity period, the maximum number of executions, and the like, then after the execution condition is satisfied, the UE may send an RRC reconfiguration complete message to the MN, which carries an indication indicating the end of the subsequent CPAC procedure. If the UE receives the indication from the MN in action 11, the UE acknowledges the end of the subsequent CPAC procedure.

At 14: the MN transmits an SN release or UE context release message to all candidate target SNs, indicating that the subsequent CPAC procedure has ended.

It should be noted that the method for information configuration provided in the embodiments of the present disclosure can be executed by an apparatus for information configuration or a control module for executing the information configuration method in the apparatus for information configuration. In the embodiments of the present disclosure, the apparatus for information configuration provided by the embodiments of the present disclosure is described by taking the information configuration method executed by the information configuration apparatus as an example.

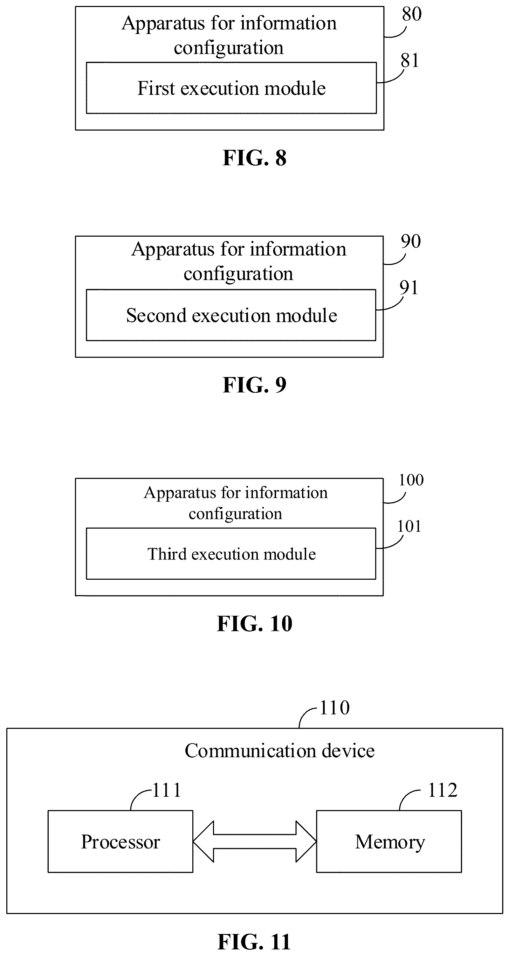

Referring to FIG. 8, FIG. 8 is a schematic structural diagram of an apparatus for information configuration according to an embodiment of the present disclosure, which is applied to a user equipment (UE). As illustrated in FIG. 8, the apparatus for information configuration 80 includes a first execution module 81.

The first execution module 81 is configured to perform a first operation, where the first operation including at least one of: receiving first information transmitted by a master node (MN); or receiving second information transmitted by a secondary node (SN).

The first information includes a first configuration for subsequent CPAC. The second information includes a second configuration for subsequent CPAC.

Optionally, the first execution module 81 is specifically configured to receive the second information transmitted by the SN through the MN.

The first information may further include at least one of the following:
a configuration of a candidate primary cell of a secondary cell group (PSCell);
first indication information for indicating that the first configuration is for subsequent CPAC;
a validity period or validity area of the first configuration;
the maximum number of subsequent CPACs supported; or
second indication information for indicating whether a selected PSCell can continue to be evaluated or whether the selected PSCell is to be released;
and/or, the second information further includes at least one of:
a configuration of the candidate PSCell;
third indication information for indicating that the second configuration is for subsequent CPAC;
a validity period or validity area of the second configuration;
the maximum number of subsequent CPACs supported; or
fourth indication information for indicating whether the selected PSCell can continue to be evaluated or whether the selected PSCell is to be released.

Optionally, the first execution module 81 is further configured to simultaneously evaluate execution conditions of candidate PSCells in the first configuration and the second configuration when the UE receives the first configuration and the second configuration.

Optionally, the first execution module 81 is further configured to:
release the stored second configuration when a candidate PSCell satisfying the execution condition is an inter-SN PSCell; or
release the stored second configuration when there is no PSCell of a serving SN or a source SN among the candidate PSCells in the first configuration; or
remain the second configuration when there is a PSCell of a serving SN or a source SN among the candidate PSCells in the first configuration.

Optionally, when the UE remains the second configuration, the UE no longer evaluates the candidate PSCell in the second configuration until the UE returns to the serving SN or source SN again.

Optionally, the first execution module 81 is further configured to remain the first configuration and the second configuration when the candidate PSCell satisfying the execution condition is an intra-SN PSCell.

Optionally, the first execution module 81 is further configured to preferentially select and/or access an intra-SN PSCell among a plurality of candidate PSCells when the plurality of candidate PSCells satisfy the corresponding execution conditions at the same time.

Optionally, the first execution module 81 is further configured to: send assistance information to the MN and/or the SN. The assistance information indicates at least one of the following: the UE enters a power saving mode, suspends a subsequent CPAC procedure, continues to retain the first configuration, or continues to retain the second configuration.

Optionally, the first execution module 81 is further configured to send fifth indication information to the MN and/or the SN when the UE returns from the power saving mode. The fifth indication information indicates that the UE continues to execute the subsequent CPAC procedure.

Optionally, the first execution module 81 is further configured to receive sixth indication information transmitted by the MN and/or the SN, where the sixth indication information indicates at least one of the following:
stopping/ending the subsequent CPAC procedure;
releasing the stored first configuration; or
releasing the stored second configuration.

Optionally, the first execution module 81 is further configured to send seventh indication information to the MN and/or the SN, where the seventh indication information indicates that the subsequent CPAC procedure has ended.

Optionally, the first execution module 81 is further configured to receive eighth indication information transmitted by the MN and/or the SN in a case where the same reference configuration is used for an SN-initiated intra-SN subsequent CPAC procedure, , an MN-initiated inter-SN subsequent CPAC procedure, and an SN-initiated inter-SN subsequent CPAC procedure. The eighth indication information is configured to instruct the UE to store only one set of reference configurations.

The information configuration apparatus 80 according to the embodiment of the present disclosure can realize each process of the method embodiment illustrated in FIG. 1 above, and can achieve the same technical effect. In order to avoid repetition, the information configuration apparatus 80 will not be repeated here.

Referring to FIG. 9, FIG. 9 is a schematic structural diagram of an information configuration apparatus according to an embodiment of the present disclosure, and the apparatus is applied to a master node (MN). As shown in FIG. 9, the information configuration apparatus 90 includes a second execution module 91.

The second execution module 91 is configured to execute a second operation, where the second operation includes at least one of: transmitting first information to a UE; or receiving second information transmitted by a secondary node (SN), and transmitting the second information to the UE.

The first information includes a first configuration for subsequent CPAC; the second information includes a second configuration for subsequent CPAC.

The first information may further include at least one of the following:
a configuration of a candidate PSCell;
first indication information for indicating that the first configuration is for subsequent CPAC;
a validity period or validity area of the first configuration;
the maximum number of subsequent CPACs supported; or
second indication information for indicating whether a selected PSCell can continue to be evaluated or whether the selected PSCell is to be released;
and/or, the second information further includes at least one of:
   a configuration of the candidate PSCell;
   third indication information for indicating that the second configuration is for subsequent CPAC;
   a validity period or validity area of the second configuration;
   the maximum number of subsequent CPACs supported; or
   fourth indication information for indicating whether a selected PSCell can continue to be evaluated or whether the selected PSCell is to be released.

Optionally, the second execution module 91 is further configured to execute at least one of the following:
receiving ninth indication information transmitted by the SN, where the ninth indication information indicates that the SN has initiated a subsequent CPAC procedure; or
receiving tenth indication information transmitted by the SN, where the tenth indication information indicates that the subsequent CPAC procedure initiated by the SN has ended.

Optionally, the second execution module 91 is further configured to execute at least one of the following:
transmitting eleventh indication information to the SN, where the eleventh indication information indicates that the MN has initiated a subsequent CPAC procedure;
transmitting twelfth indication information to the SN, where the twelfth indication information indicates an end of the subsequent CPAC procedure initiated by the MN;
transmitting thirteenth indication information to the SN, wherein the thirteenth indication information indicates whether the SN is allowed to initiate a subsequent CPAC procedure;
transmitting third information to the SN when the SN initiates the subsequent CPAC procedure, where the third information is used to reject the SN-initiated subsequent CPAC procedure; or
when the SN initiates the subsequent CPAC procedure, transmitting the fourteenth indication information to the SN, where the fourteenth indication information indicates that an MN-initiated subsequent CPAC has been configured for the UE.

Optionally, the second execution module 91 is further configured to execute at least one of the following:
transmitting fourth information to the SN, where the fourth information includes the maximum number of candidate PSCells configurable for the SN to initiate a subsequent CPAC;
receiving fifteenth indication information transmitted by the SN, where the fifteenth indication information indicates an end of a subsequent CPAC procedure;
receiving fifth information transmitted by the SN and transmitting the fifth information to the UE; where the fifth information includes sixth indication information for indicating at least one of: ending a subsequent CPAC procedure, or releasing the stored second configuration; or
receiving seventh indication information transmitted by the UE, where the seventh indication information indicates that the subsequent CPAC procedure has ended.

Optionally, the second execution module 91 is further configured to execute at least one of the following:
transmitting an addition request message to a target SN, where the addition request message including sixteenth indication information for indicating that the addition request message is for subsequent CPAC;
transmitting sixth indication information to the UE, wherein the sixth indication information indicates at least one of the following: ending the subsequent CPAC procedure; or releasing the stored first configuration;
receiving seventh indication information transmitted by the UE, where the seventh indication information indicates an end of a subsequent CPAC procedure;
transmitting seventeenth indication information to the target SN, where the seventeenth indication information indicates the end of the subsequent CPAC procedure; or
receiving an SN change request message sent by a source SN, where the SN change request message includes eighteenth indication information for indicating that the SN change request is for subsequent CPAC, or the eighteenth indication information for indicating that the subsequent CPAC is ended/stopped.

Optionally, the second execution module 91 is further configured to: receive assistance information transmitted by the UE. The assistance information indicates at least one of the following: the UE enters a power saving mode, suspends a subsequent CPAC procedure, continues to retain the first configuration, or continues to retain the second configuration.

Optionally, the second execution module 91 is further configured to receive fifth indication information transmitted by the UE when the UE returns from the power saving mode. The fifth indication information is used to instruct the UE to continue executing a subsequent CPAC procedure.

The information configuration apparatus 90 according to the embodiment of the present disclosure can realize each process of the method embodiment shown in FIG. 2 above, and can achieve the same technical effect. In order to avoid repetition, the information configuration apparatus 90 will not be repeated here.

Referring to FIG. 10, FIG. 10 is a schematic structural diagram of an information configuration apparatus according to an embodiment of the present disclosure, and the apparatus is applied to a secondary node (SN). As shown in FIG. 10, the information configuration apparatus 100 includes a third execution module 101.

The third execution module 101 is configured to execute a third operation, where the third operation includes at least one of: transmitting second information to a UE; or transmitting the second information to a master node (MN).

The second information includes a second configuration for subsequent CPAC.

The second information may further include at least one of the following:
a configuration of a candidate PSCell;
third indication information for indicating that the second configuration is for subsequent CPAC;
a validity period or validity area of the second configuration;
the maximum number of subsequent CPACs supported; or
fourth indication information for indicating whether a selected PSCell can continue to be evaluated or whether the selected PSCell is to be released.

Optionally, the third execution module 101 is further configured to execute at least one of the following:
transmitting ninth indication information to the MN, where the ninth indication information indicates that the SN has initiated a subsequent CPAC procedure; or
transmitting tenth indication information to the MN, where the tenth indication information indicates the end of the subsequent CPAC procedure initiated by the SN.

Optionally, the third execution module 101 is further configured to execute at least one of the following:
receiving eleventh indication information transmitted by the MN, where the eleventh indication information indicates that the MN has initiated a subsequent CPAC procedure;
receiving twelfth indication information transmitted by the MN, where the twelfth indication information indicates an end of a subsequent CPAC procedure initiated by the MN;
receiving a thirteenth indication information transmitted by the MN, where the thirteenth indication information indicates whether the SN is allowed to initiate a subsequent CPAC procedure;
receiving third information transmitted by the MN when the SN initiates a subsequent CPAC procedure, where the third information is used for rejecting the SN to initiate a subsequent CPAC procedure; or
when the SN initiates the subsequent CPAC procedure, receiving the fourteenth indication information transmitted by the MN, where the fourteenth indication information indicates that a subsequent CPAC initiated by the MN has been configured for the UE.

Optionally, after receiving the eleventh indication information transmitted by the MN, the SN does not start a subsequent CPAC procedure.

Optionally, the third execution module 101 is further configured to execute at least one of the following:
receiving fourth information transmitted by the MN, where the fourth information includes the maximum number of candidate PSCells configurable for the SN to initiate a subsequent CPAC;
transmitting nineteenth indication information to the MN, where the nineteenth indication information indicates that the UE is performing a subsequent CPAC procedure;
transmitting fifteenth indication information to the MN, where the fifteenth indication information indicates an end of a subsequent CPAC procedure;
transmitting sixth indication information to the UE, where the sixth indication information indicates at least one of: ending a subsequent CPAC procedure, or releasing the stored second configuration;
transmitting fifth information to the UE through the MN. The fifth information includes sixth indication information for indicating at least one of: ending a subsequent CPAC procedure, or releasing the stored second configuration; or
receiving seventh indication information transmitted by the UE, where the seventh indication information indicates the end of a subsequent CPAC procedure.

Optionally, if the SN is a source SN and the subsequent CPAC procedure is initiated, the third execution module 101 is further configured to: send an SN change request to the MN, where the SN change request includes eighteenth indication information, and the eighteenth indication information indicates that the SN change request is used for subsequent CPAC, or the eighteenth indication information indicates that the subsequent CPAC is terminated.

Optionally, if the SN is a target SN and a subsequent CPAC procedure is initiated, the third execution module 101 is further configured to execute at least one of the following:
receiving an addition request message sent by the MN, where the addition request message includes sixteenth indication information for indicating that the addition request message is for subsequent CPAC; or
receiving seventeenth indication information transmitted by the MN, where the seventeenth indication information indicates the end of the subsequent CPAC procedure.

Optionally, the third execution module 101 is further configured to receive assistance information transmitted by the UE. The assistance information indicates at least one of the following: the UE enters the power saving mode, suspends the subsequent CPAC procedure, continues to retain the first configuration, or continues to retain the second configuration.

Optionally, the third execution module 101 is further configured to receive fifth indication information transmitted by the UE when the UE returns from the power saving mode. The fifth indication information is used to instruct the UE to continue executing the subsequent CPAC procedure.

The information configuration apparatus 100 according to the embodiment of the present disclosure can realize each process of the method embodiment shown in FIG. 3 above, and can achieve the same technical effect, and will not be repeatedly described here in order to avoid repetition.

Alternatively, as shown in FIG. 11, an embodiment of the present disclosure further provides a communication device 110, including a processor 111, a memory 112, and a program or instructions stored in the memory 112 and executable by the processor 111. When the program or instructions are executed by the processor 111, each process of the above-described embodiment of the information configuration method can be realized, and the same technical effect can be achieved. In order to avoid repetition, the program or instructions will not be repeated here. The communication device 110 may be selected as a UE, a primary node (MN), or a secondary node (SN).

Embodiments of the present disclosure also provide a readable storage medium storing a program or instructions thereon, and when the program or instructions are executed by a processor, each process of the method embodiment shown in the above-described information configuration can be realized and the same technical effect can be achieved, so in order to avoid repetition, the description will not be repeated here.

Computer-readable media include permanent and non-permanent, removable and non-removable media, and information storage may be achieved by any method or technique. The information may be computer-readable instructions, data structures, modules of programs, or other data. Examples of storage media for a computer include, but are not limited to, phase-change memory (PRAM), static random access memory (SRAM), dynamic random access memory (DRAM), other types of random access memory (RAM), read-only memory (ROM), electrically erasable programmable read-only memory (EEPROM), compact disc read-only memory (CD-ROM), digital video disc (DVD) or other optical storage, magnetic cartridges, magnetic disc storage or other magnetic storage devices, or any other non-transmission medium that can be used to store information that can be accessed by a computing device. As defined herein, computer-readable media does not include transitory media, such as modulated data signals and carrier waves.

It should be noted that, herein, the terms "comprising", "including" or any other variation thereof are intended to encompass a non-exclusive inclusion such that a process, method, article, or apparatus that includes a series of elements includes not only those elements, but also other elements that are not explicitly listed, or elements inherent to such a process, method, article, or apparatus. Without further limitation, an element defined by the statement "comprising/including a" does not preclude the presence of additional identical elements in a process, method, article, or apparatus that includes the element.

The above-described serial numbers of the embodiments of the present disclosure are for description only, and do not represent the advantages and disadvantages of the embodiments.

From the above description of the embodiments, those skilled in the art can clearly understand that the methods of the above embodiments can be implemented by software and a necessary general hardware platform, and of course, it can also be implemented by hardware, but the former is a preferred embodiment in many cases. Based on this understanding, the technical solution of the present disclosure may be embodied in the form of a software product, which is stored in a storage medium (such as ROM/RAM, magnetic disk, optical disk) and includes several instructions for causing a service classification device (which may be a mobile phone, a computer, a server, an air conditioner, or a network device, etc.) to perform the method described in various embodiments of the present disclosure.

The above are only preferred embodiments of the present disclosure, and it should be pointed out that for those skilled in the art, several improvements and retouches can be made without departing from the principles of the present disclosure, and these improvements and retouches should also be regarded as the scope of protection of the present disclosure.

## Claims

1. A method for information configuration, comprising:
performing, by a user equipment (UE), a first operation,
wherein the first operation includes at least one of: receiving first information transmitted by a master node (MN); or receiving second information transmitted by a secondary node (SN); and
wherein the first information includes a first configuration for subsequent conditional primary cell of a secondary cell group (PSCell) addition or change (CPAC), and the second information includes a second configuration for subsequent CPAC.

2. The method of claim 1, wherein receiving the second information transmitted by the SN comprises:
receiving, by the UE, the second information transmitted by the SN through the MN.

3. The method of claim 1, wherein the first information further comprises at least one of:
a configuration of a candidate PSCell;
first indication information for indicating that the first configuration is for subsequent CPAC;
a validity period or validity area of the first configuration;
the maximum number of subsequent CPACs supported; or
second indication information for indicating whether a selected PSCell can continue to be evaluated or whether the selected PSCell is to be released;
and/or,
wherein the second information further comprises at least one of:
a configuration of the candidate PSCell;
third indication information for indicating that the second configuration is for subsequent CPAC;
a validity period or validity area of the second configuration;
the maximum number of subsequent CPACs supported; or
fourth indication information for indicating whether the selected PSCell can continue to be evaluated or whether the selected PSCell is to be released.

4. The method of claim 1, wherein when the UE receives the first configuration and the second configuration, the method further comprises:
simultaneously evaluating, by the UE, execution conditions of candidate PSCells in the first configuration and the second configuration.

5. The method of claim 4, wherein the method further comprises one of the following:
when a candidate PSCell satisfying the execution condition is an inter-SN PSCell, releasing, by the UE, a stored second configuration; or
when there is no PSCell of a serving SN or a source SN among candidate PSCells in the first configuration, releasing, by the UE, a stored second configuration; or
remaining, by the UE, the second configuration when there is a PSCell of a serving SN or a source SN among candidate PSCells in the configuration.

6. The method of claim 5, wherein when the UE remains the second configuration, the UE no longer evaluates candidate PSCells in the second configuration until the UE returns to the serving SN or source SN again.

7. The method of claim 4, wherein when a candidate PSCell satisfying the execution condition is an intra-SN PSCell, the method further comprises:
remaining, by the UE, the first configuration and the second configuration.

8. The method of claim 4, wherein when a plurality of candidate PSCells simultaneously satisfy corresponding execution conditions, the method further comprises:
preferentially selecting and/or accessing, by the UE, an intra-SN PSCell among the plurality of candidate PSCells.

9. The method of claim 1, further comprising:
transmitting, by the UE, assistance information to the MN and/or the SN; wherein the assistance information indicates at least one of the following: the UE enters a power saving mode, suspends a subsequent CPAC procedure, continues to retain the first configuration, or continues to retain the second configuration.

10. The method of claim 9, wherein when the UE returns from a power saving mode, the method further comprises:
transmitting, by the UE, fifth indication information to the MN and/or the SN, wherein the fifth indication information indicates that the UE continues to execute the subsequent CPAC procedure.

11. The method of claim 1, further comprising:
receiving, by the UE, sixth indication information transmitted by the MN and/or the SN, wherein the sixth indication information indicates at least one of the following:
stopping a subsequent CPAC procedure;
releasing a stored first configuration; or
releasing a stored second configuration.

12. The method of claim 1, further comprising:
transmitting, by the UE, seventh indication information to the MN and/or the SN, wherein the seventh indication information indicates that a subsequent CPAC procedure has ended.

13. The method of claim 1, wherein the method further comprises: when an SN-initiated intra-SN subsequent CPAC procedure, an MN-initiated inter-SN subsequent CPAC procedure, and an SN-initiated inter-SN subsequent CPAC procedure use a same reference configuration,
receiving, by the UE, eighth indication information transmitted by the MN and/or the SN, wherein the eighth indication information is used to instruct the UE to store only one set of reference configurations.

14. A method for information configuration, comprising:
performing, by a master node (MN), a second operation, wherein the second operation includes at least one of:
transmitting first information to a user equipment (UE); or
receiving second information transmitted by a secondary node (SN), and transmitting the second information to the UE; and
wherein the first information includes a first configuration for subsequent conditional primary cell of a secondary cell group (PSCell) addition or change (CPAC), and the second information includes a second configuration for subsequent CPAC.

15. The method of claim 14, wherein the first information further comprises at least one of:
a configuration of a candidate primary cell of a secondary cell group (PSCell);
first indication information for indicating that the first configuration is for subsequent CPAC;
a validity period or validity area of the first configuration;
the maximum number of subsequent CPACs supported; or
second indication information for indicating whether a selected PSCell can continue to be evaluated, or whether the selected PSCell is to be released;
and/or,
wherein the second information further comprises at least one of:
a configuration of the candidate PSCell;
third indication information for indicating that the second configuration is for subsequent CPAC;
a validity period or validity area of the second configuration;
the maximum number of subsequent CPACs supported; or
fourth indication information for indicating whether the selected PSCell can continue to be evaluated or whether the selected PSCell is to be released.

16. The method of claim 14, further comprising at least one of the following:
receiving, by the MN, ninth indication information transmitted by the SN, wherein the ninth indication information indicates that the SN has initiated a subsequent CPAC procedure; or
receiving, by the MN, tenth indication information transmitted by the SN, wherein the tenth indication information indicates that the subsequent CPAC procedure initiated by the SN has ended.

17. The method of claim 14, further comprising at least one of the following:
transmitting, by the MN, eleventh indication information to the SN, wherein the eleventh indication information indicates that the MN has initiated a subsequent CPAC procedure;
transmitting, by the MN, twelfth indication information to the SN, wherein the twelfth indication information indicates that the subsequent CPAC procedure initiated by the MN has ended;
transmitting, by the MN, thirteenth indication information to the SN, wherein the thirteenth indication information indicates whether the SN is allowed to initiate a subsequent CPAC procedure;
transmitting, by the MN, third information to the SN when the SN initiates the subsequent CPAC procedure, wherein the third information is used to reject the subsequent CPAC procedure initiated by the SN; or
transmitting, by the MN, fourteenth indication information to the SN when the SN initiates the subsequent CPAC procedure, wherein the fourteenth indication information indicates that an MN-initiated subsequent CPAC has been configured for the UE.

18. The method of claim 14, wherein during receiving the second information transmitted by the SN, the method further comprises at least one of the following:
transmitting, by the MN, fourth information to the SN, wherein the fourth information includes the maximum number of candidates PSCells configurable for the SN to initiate a subsequent CPAC;
receiving, by the MN, fifteenth indication information transmitted by the SN, wherein the fifteenth indication information indicates an end of a subsequent CPAC procedure;
receiving, by the MN, fifth information transmitted by the SN, and transmitting the fifth information to the UE, where the fifth information includes sixth indication information for indicating at least one of: ending the subsequent CPAC procedure, or releasing a stored second configuration; or
receiving, by the MN, seventh indication information transmitted by the UE, wherein the seventh indication information indicates that the subsequent CPAC procedure has ended.

19. The method of claim 14, wherein during transmitting the first information to the UE, the method further comprises at least one of the following:
transmitting, by the MN, an addition request message to a target SN, wherein the addition request message includes sixteenth indication information for indicating that the addition request message is for subsequent CPAC;
transmitting, by the MN, sixth indication information to the UE, wherein the sixth indication information indicates at least one of the following: ending a subsequent CPAC procedure, or releasing a stored first configuration;
receiving, by the MN, seventh indication information transmitted by the UE, wherein the seventh indication information indicates that the subsequent CPAC procedure has ended;
transmitting, by the MN, seventeenth indication information to the target SN, wherein the seventeenth indication information indicates that the subsequent CPAC procedure has ended; or
receiving, by the MN, an SN change request message transmitted by a source SN, wherein the SN change request message includes eighteenth indication information, the eighteenth indication information indicating that the SN change request is for subsequent CPAC, or the eighteenth indicating information instructing to end the continuous CPAC.

20. The method of claim 14, further comprising:
receiving, by the MN, assistance information transmitted by the UE, wherein the assistance information indicates at least one of the following: the UE enters a power saving mode, suspends a subsequent CPAC procedure, continues to retain the first configuration, or continues to retain the second configuration.

21. The method of claim 20, wherein when the UE returns from a power saving mode, the method further comprises:
receiving, by the MN, fifth indication information transmitted by the UE, wherein the fifth indication information is used to instruct the UE to continue the subsequent CPAC procedure.

22. A method for information configuration, comprising:
performing, by a secondary node (SN), a third operation,
wherein the third operation includes at least one of: transmitting second information to a user equipment (UE), or transmitting the second information to a master node (MN); and
wherein the second information includes a second configuration for subsequent CPAC.

23. The method of claim 22, wherein the second information further comprises at least one of the following:
a configuration of a candidate primary cell of a secondary cell group (PSCell);
third indication information for indicating that the second configuration is for subsequent CPAC;
a validity period or validity area of the second configuration;
the maximum number of subsequent CPACs supported; or
fourth indication information for indicating whether a selected PSCell can continue to be evaluated or whether the selected PSCell is to be released.

24. The method of claim 22, further comprising at least one of the following:
transmitting, by the SN, ninth indication information to the MN, wherein the ninth indication information indicates that the SN has initiated a subsequent CPAC procedure; or
transmitting, by the SN, tenth indication information to the MN, wherein the tenth indication information indicates that the subsequent CPAC procedure initiated by the SN has ended.

25. The method of claim 22, further comprising at least one of the following:
receiving, by the SN, eleventh indication information transmitted by the MN, wherein the eleventh indication information indicates that the MN has initiated a subsequent CPAC procedure;
receiving, by the SN, twelfth indication information transmitted by the MN, wherein the twelfth indication information indicates that the subsequent CPAC procedure initiated by the MN has ended;
receiving, by the SN, thirteenth indication information transmitted by the MN, wherein the thirteenth indication information indicates whether the SN is allowed to initiate a subsequent CPAC procedure;
when the SN initiates the subsequent CPAC procedure, receiving, by the SN, third information transmitted by the MN, wherein the third information is used to reject the subsequent CPAC procedure initiated by the SN; or
when the SN initiates the subsequent CPAC procedure, receiving, by the SN, fourteenth indication information transmitted by the MN, wherein the fourteenth indication information indicates that an MN-initiated subsequent CPAC has been configured for the UE.

26. The method of claim 25, wherein the SN does not initiate a subsequent CPAC procedure after receiving eleventh indication information transmitted by the MN.

27. The method of claim 22, wherein during performing the third operation, the method further comprises at least one of the following:
receiving, by the SN, fourth information transmitted by the MN, wherein the fourth information includes the maximum number of candidate PSCells configurable for the SN to initiate a subsequent CPAC procedure;
transmitting, by the SN, nineteenth indication information to the MN, wherein the nineteenth indication information indicates that the UE is executing a subsequent CPAC procedure;
transmitting, by the SN, fifteenth indication information to the MN, wherein the fifteenth indication information indicates an end of a subsequent CPAC procedure;
transmitting, by the SN, sixth indication information to the UE, wherein the sixth indication information indicates at least one of the following: ending a subsequent CPAC procedure, or releasing a stored second configuration;
transmitting, by the SN, fifth information to the UE through the MN, wherein the fifth information includes sixth indication information for indicating at least one of: ending the subsequent CPAC procedure, or releasing a stored second configuration; or
receiving, by the SN, seventh indication information transmitted by the UE, wherein the seventh indication information indicates the subsequent CPAC procedure has ended.

28. The method of claim 22, wherein if the SN is a source SN and a subsequent CPAC procedure is initiated, the method further comprises:
transmitting, by the source SN, an SN change request to the MN, wherein the SN change request includes eighteenth indication information, the eighteenth indication information indicating that the SN change request is for subsequent CPAC, or indicating that the subsequent CPAC procedure has ended.

29. The method of claim 22, wherein if the SN is a target SN and a subsequent CPAC procedure is initiated, the method further comprises at least one of:
receiving, by the target SN, an addition request message transmitted by the MN, wherein the addition request message includes sixteenth indication information for indicating that the addition request message is for subsequent CPAC; or
receiving, by the target SN, seventeenth indication information transmitted by the MN, wherein the seventeenth indication information indicates the end of the subsequent CPAC procedure.

30. The method of claim 22, further comprising:
receiving, by the SN, assistance information transmitted by the UE, wherein the assistance information indicates at least one of the following: the UE enters a power saving mode, suspends a subsequent CPAC procedure, continues to retain a first configuration for subsequent CPAC, or continues to retain the second configuration.

31. The method of claim 30, wherein when the UE returns from a power saving mode, the method further comprises:
receiving, by the SN, fifth indication information transmitted by the UE, wherein the fifth indication information indicates that the UE will continue the subsequent CPAC procedure.

32. An apparatus for information configuration, comprising:
a first execution module, configured to execute a first operation, wherein the first operation includes at least one of: receiving first information transmitted by a master node (MN), or receiving second information transmitted by a secondary node (SN); and
wherein the first information includes a first configuration for subsequent conditional primary cell of a secondary cell group (PSCell) addition or change (CPAC), and the second information includes a second configuration for subsequent CPAC.

33. An apparatus for information configuration, comprising:
a second execution module, configured to execute a second operation,
wherein the second operation includes at least one of: transmitting first information to a user equipment (UE); or receiving second information transmitted by a secondary node (SN), and transmitting the second information to the UE; and
wherein the first information includes a first configuration for subsequent conditional primary cell of a secondary cell group (PSCell) addition or change (CPAC), and the second information includes a second configuration for subsequent CPAC.

34. An apparatus for information configuration, comprising:
a third execution module, configured to execute a third operation,
wherein the third operation includes at least one of: transmitting second information to a user equipment (UE), or transmitting the second information to a master node (MN); and
wherein the second information includes a second configuration for subsequent conditional primary cell of a secondary cell group (PSCell) addition or change (CPAC).

35. A communication device, comprising:
a processor;
a memory; and
a program or instructions stored on the memory and executable by the processor,
wherein the program or instructions, when executed by the processor, implement:
the method for information configuration of any one of claims 1 to 13; or
the method for information configuration of any one of claims 14 to 21; or
the method for information configuration of any one of claims 22 to 31.

36. A readable storage medium having stored thereon a program or instructions that, when executed by a processor, implement the method for information configuration of any one of claims 1 to 13, or implement the method for information configuration of any one of claims 14 to 21, or implement the method for information configuration of any one of claims 22 to 31.
